# EUROPEAN PATENT APPLICATION

(11) **EP 1 465 399 A1**
(43) Date of publication of application: **06.10.2004**
(21) Application number: 03290824.6
(22) Date of filing: 02.04.2003
(51) Int. Cl.: H04M 15/26, H04M 17/00, H04Q 7/38

(54) **Telecommunications apparatus and method**

(71) Applicant: Orange S.A., 75505 Paris Cédex 15 (FR)
(72) Inventor: Strassmann, Steven Henry, Brookline, MA 02446 (US)
(74) Representative: DeVile, Jonathan Mark, Dr.

(57) **Abstract**

A telecommunications apparatus operable to provide information to mobile terminals for determining calling credit information for accessing a mobile radio telecommunications network. The telecommunications apparatus includes a credit server for storing an amount of available calling credit. The credit server is operable to determine the duration of a call made by a user from a mobile terminal. The credit server is operable upon termination of a call to communicate data to the mobile terminal, the data providing information to the mobile terminal from which an amount of available calling credit is displayable to the user. The credit server thereby automatically provides data to a user after termination of a call from which an amount of calling credit can be determined and displayed graphically to user. Thus a requirement for a user to establish a call to determine an amount of available calling credit is obviated or at least reduced.

## Description

### Field of the Invention

The present invention relates to telecommunications apparatus operable to provide information to mobile terminals for determining calling credit information for accessing a mobile radio telecommunications network.

### Background of the Invention

Mobile radio telecommunications networks provide a facility for communicating via a radio access interface within a radio coverage area provided by the network. To provide the radio coverage area, the mobile radio telecommunications systems include an arrangement of base stations, which are inter-connected via a backbone network.

Known arrangements for allowing users to access a mobile radio telecommunications network for voice or data communications include providing a pre-payment arrangement for users to purchase a predetermined amount of calling credit in advance of usage. Alternatively, for example, users may subscribe to a monthly tariff, which provides a certain amount of calling credit within a particular month and may include all calls within a particular calling tariff. For other calling tariffs, the monthly subscription may provide a predetermined amount of credit for calls using the tariff, and after a user has exceeded this predetermined amount, calls may be charged in addition to the monthly subscription. A problem with such calling tariff and pre-payment arrangements is that the user maybe unaware of a calling credit, which is available for making calls. As such a user maybe discouraged from making calls without knowing a currently available calling credit for fear of using an entire amount of the available calling credit whether prepaid or remaining for a particular tariff. Furthermore, a user may find it inconvenient if unaware that an amount of prepaid calling credit has expired, which in some cases may leave the user without access to the mobile radio network.

Known arrangements for providing a user with access to an amount of available calling credit include establishing a call to an automated call centre, which returns an indication of an available calling credit as a text message. Requiring a user to establish a call to a call centre can be inconvenient and represents an amount of communications traffic which the mobile network has to support, which may be at the expense of revenue generating traffic. Furthermore, although automated, generating an indication of the available calling credit represents a load on the call centre.

### Summary of Invention

According to the present invention there is provided a telecommunications apparatus operable to provide information to mobile terminals for determining calling credit information for accessing a mobile radio telecommunications network. The telecommunications apparatus includes a credit server for storing an amount of available calling credit. The credit server is operable to determine the duration of a call made by a user from a mobile terminal. The credit server is operable upon termination of a call to communicate data to the mobile terminal, the data providing information to the mobile terminal from which an amount of available calling credit is displayable to the user.

In order to reduce an amount of traffic loading on a mobile radio network, and reduce a loading on call centres which would otherwise have to provide an indication of an amount of calling credit available to a user, for example, either as an automatically generated text message or orally from an operator, embodiments of the present invention provide a telecommunications apparatus which includes a credit server which automatically provides data to a user after termination of a call from which an amount of calling credit can be determined and displayed graphically to user. Thus a requirements for a user to establish a call to determine an amount of available calling credit is obviated or at least reduced.

The amount of calling credit available may be displayed to a user as a course indication, for example as a "fuel gauge" showing full, 3/4 full, 1/2 full, 1/4 full or empty. As such, the accuracy with which the calling credit is represented is reduced, so that the user is provided with an approximate indication of available calling credit. This provides an advantage since the calling credit may be adjusted as a result of changing calling tariffs, so that a user is not disappointed to discover that an amount of calling credit available is less than that displayed.

In one example embodiment the data provided by the credit server to the mobile terminal includes an amount of calling credit remaining to the user after the termination of the call. In order to calculate the remaining calling credit, the credit server is operable to determine the duration of the call, to calculate the amount of calling credit used from the duration of the call and to determine the amount of calling credit remaining from the available calling credit and the used calling credit. The credit server then stores the remaining calling credit as the available calling credit.

In another example embodiment, the amount of remaining calling credit is calculated within the mobile terminal.

According to an aspect of the present invention there is provided a telecommunications apparatus operable to provide information to mobile terminals for determining calling credit information for accessing a mobile radio telecommunications network. The telecommunications apparatus includes a credit server for storing an amount of available calling credit, and at least one calling tariff for making calls. The credit server is operable to communicate data representing the available calling credit to the mobile terminal and the calling tariff, and to determine the duration of a call made by a user from a mobile terminal. Upon termination of the call the credit server is operable to communicate data providing the duration of the call to the mobile terminal, the mobile terminal being provided with data from which an amount of available calling credit is displayable to the user.

The credit server according to an example embodiment of the invention provides data concerning an available calling credit and current calling tariffs to the mobile terminal. The information can be provided at any time, and may be provided for example, at any time that either of the available calling credit and the calling tariffs changes. However, upon termination of a call, the credit server communicates the duration of the call. The mobile terminal may therefore determine the calling credit remaining from the duration of the call, the calling tariff used, as determined by the mobile terminal, and from an available calling credit which has been pre-stored within the mobile terminal.

Although the mobile terminal is provided with sufficient information from which a remaining calling credit may be visually displayed automatically to the user, some embodiments in which the remaining calling credit is calculated within the mobile terminal may also calculate the remaining calling credit within the credit server. The remaining calling credit is thereby made available to a network operator for example to provide confirmation of the remaining calling credit for security and for generating billing information for the user. In order to maintain an amount of available calling credit available to the user within the network, the credit server may determine an amount of remaining calling credit by calculating the amount of calling credit used from the duration of the call, in combination with the calling tariff used for the call. The remaining calling credit is then calculated by subtracting the calling credit used during the call from the available calling credit. The remaining calling credit is then stored as an amount of calling credit available to the user.

According to an aspect of the present invention there is provided a mobile terminal for communicating via a mobile radio telecommunications network. The mobile terminal includes a radio communications interface operable to send and receive data via a radio access interface to and from the mobile radio telecommunications network. The mobile terminal includes a graphical display driver for displaying information on a graphical display device, and a processor unit operable to receive a first signalling message via the communications interface providing an amount of calling credit available to a user of the mobile terminal and at least one calling tariff. A second signalling message is communicated after termination of a call, the second signalling message indicating the duration of a call. The processor is operable to determine an amount of calling credit remaining to a user of the mobile terminal from the duration of the call provided by the second signalling message in combination with the calling tariff for the call provided by the first signalling message. In combination with the graphics display driver the processor unit is operable to represent the remaining calling credit graphically on the graphical display device.

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 is a schematic block diagram of a mobile radio network in accordance with the GSM standard, including a telecommunications apparatus forming part of a call centre;
Figure 2 is a schematic block diagram of the call centre shown in Figure 1;
Figure 3 is a schematic block diagram of the telecommunications apparatus shown in Figure 2;
Figure 4 is a schematic block diagram of a mobile terminal displaying call back time options;
Figure 5 is a schematic block diagram of a mobile terminal displaying an indication of an expired time before call back;
Figure 6 is a schematic block diagram of a mobile terminal displaying an indication of a call back time to go;
Figure 7 is a flow diagram illustrating the operation of the telecommunications apparatus appearing in Figure 3;
Figure 8 is a schematic block diagram of a mobile terminal displaying an available calling credit to a user ;
Figure 9 is a schematic block diagram of a mobile radio network corresponding to the GSM standard, including a telecommunications apparatus forming part of an operator service centre;
Figure 10 is a schematic block diagram of a mobile terminal and a base station illustrating a process for displaying a remaining call credit value;
Figure 11 is a schematic block diagram of a mobile terminal and a base station illustrating a further process for displaying a remaining call credit value;
Figure 12 is a schematic block diagram of an example of a mobile terminal displaying an available calling credit to a user in the form of a "fuel gauge";
Figure 13 is a schematic block diagram of a mobile terminal displaying an available calling credit to a user in the form of a pie-chart;
Figure 14 is a schematic block diagram of a mobile radio network in accordance with the GSM standard, including a telecommunications apparatus having an outage monitoring processor;
Figure 15 is a block diagram of part of the mobile network of Figure 14, illustrating an example of outage of the mobile network;
Figure 16 is a block diagram of part of the mobile network of Figure 14, illustrating a further example of outage of the mobile network;
Figure 17 is a part schematic block diagram, part flow diagram illustrating the operation of the telecommunications apparatus shown in Figure 14, generating outage information in response to a loss of service; and
Figure 18 is a schematic block diagram a mobile terminal displaying outage information.

### Description of the Example Embodiments

Embodiments of the present invention will be described with reference to operator services provided as part of a mobile radio network. However it will be appreciated that embodiments of the present invention are not limited to a mobile radio network and may be applicable to other types of telecommunications networks both fixed and mobile.

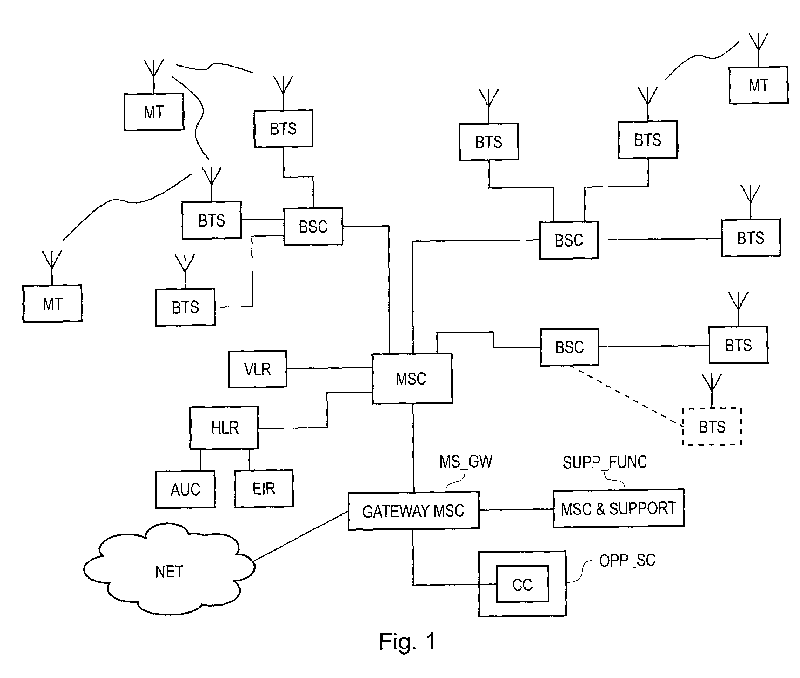

Figure 1 provides an example schematic block diagram of a mobile radio network corresponding to the Global System for Mobiles (GSM) standard. In Figure 1 a mobile switching centre MSC is arranged to be connected to a plurality of base station controllers BSC. Each of the base station controllers BSC are connected to a plurality of base transceiver stations BTS. The base transceiver stations BTS and the base station controller BSC to which they are connected form a base station sub-system. Data is communicated via an air interface in accordance with the GSM standard between mobile terminals MT and one of the base transceiver station BTS with which the mobile terminal is affiliated via radio signals. Therefore whilst a mobile terminal is within a coverage area provided by a base transceiver station, radio communications are provided with that base transceiver station via which data can be transmitted and received. In the remainder of this description the base transceiver stations BTS will be referred to as base stations for brevity.

Also forming part of the GSM network shown in Figure 1 is a visitor location register VLR which maintains a current location of each of the mobile terminals within the network. The VLR provides an indication of which of the base stations or group of base stations a mobile terminal may be currently affiliated. The GSM network also includes a home location register HLR which stores information specific to each subscriber to the network. The home location register HLR has an equipment identity register to provide a facility through which a network operator may track stolen or malfunctioning terminals. The home location register HLR also includes an authentication centre AUC which is used to store information that is associated with security features provided by the network.

The mobile switching centre MSC is connected to a gateway MSC MSC_GW which provides a facility for connecting the mobile switching centre MSC to other telecommunications networks which may include a public switched telephone network or the world-wide web NET. An MSC support function SUPP_FUNC is also connected to the gateway MSC MSC_GW. More details on the GSM network may be found in the publication entitled "GSM, CDMA1 and 3G systems" by R. Steel ET AL published by Willie ISBN 0471491853.

One embodiment of the present invention will now be described. As shown in Figure 1, connected to the gateway MSC MSC_GW is an operator service centre OPP_SC. The operator service centre OPP_SC may include a call centre CC, which provides a facility for users to access operator services. In other embodiments the call centre CC may be separate from the operator service centre OPP_SC, and may be connected to a communications network which is not associated with the service for which the call centre functions to receive enquires for that service.

The call centre CC may be accessed via the GSM network or indeed via another network via the gateway MSC MSC_GW. The call centre CC provides a facility for connecting user terminals to operator terminals which may provide access to a human operator thereby providing a facility for a user to present a query verbally. Alternatively, the operator terminals provided in the call centre CC may include automated response equipment, or devices providing communications via other forms of media such as text or through the world-wide web as part of an Internet website.

### Call Centre Call Back

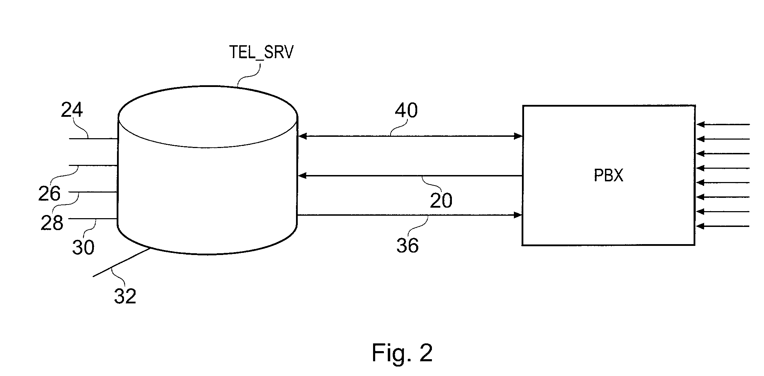

Figure 2 provides a schematic block diagram of the call centre CC forming part of the operator service centre OPP_SC shown in Figure 1 according to an example embodiment of the present invention. In Figure 2, a private branch exchange PBX provides service lines 20 to a telecommunications server TEL_SRV for providing call processing functions according to an embodiment of the invention. The telecommunications server TEL_SRV provides a facility for connecting operator terminals connected to channels 24, 26, 28, 30, 32 to calls from user terminals connected to the service lines 20 by the private branch exchange PBX.

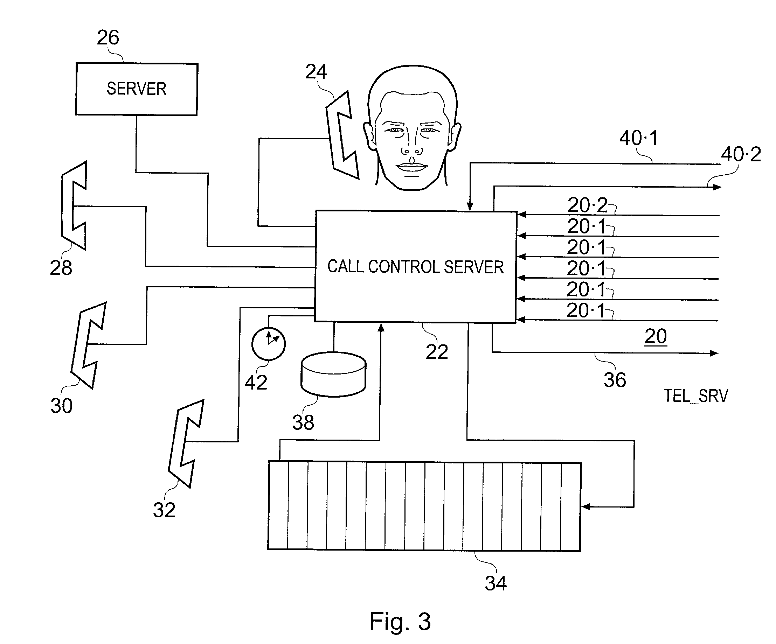

The telecommunications server TEL_SRV is shown in more detail in Figure 3. The telecommunications server shown in Figure 3 includes a call control server 22. The call control server 22 provides a facility for connecting calls from the PBX to operator terminals 24, 26, 28, 30, 32. The operator terminals may comprise communicator sets 24 through which human operators may service a call or may include a server 26 which is operable to provide an interactive communications responses and may form part of a website. Other operator terminals 28, 30 and 32 may include a facility for providing an automated audio response when a user terminal is connected via the call control server or may be operator communicator sets providing a connection to a human operator through which an enquiry can be made.

The call centre CC includes a queuing processor 34 forming a pipeline or First In First Out (FIFO) buffer through which calls may be queued. The queuing of calls may be required if a call is received through one of the connecting channels 20 but there is no operator terminal available to service this call. If so, then the call may be placed in a queue formed by the buffer 34 until an operator is available to service the call.

The call control server 22 may estimate a mean waiting time before a call held in the queuing buffer 34 may be serviced by an operator terminal. The mean waiting time may be estimated from a rate of serving calls received by operator terminals in combination with the number of waiting calls determined from the state of the queuing buffer 34.

The example embodiment shown in Figure 3 is arranged to make the number of calls received at the call control server 22 more predictable so that calls may be handled in a more efficient way. The example embodiment provides an advantage by reducing a likelihood of users' calls having to wait unproductively in the queuing buffer 34 to be serviced. To this end, the call control server 22 is arranged to estimate the mean waiting time for a call placed in the queuing buffer 34 to be serviced. As mentioned above this is determined from a mean service time of each call in combination with the number of calls present in the queuing buffer 34. Accordingly, multiplying the mean service time by the number of waiting calls ahead of the call concerned provides an estimation of the call waiting time.

In operation the call control server 22 estimates at least one time when it is likely that an operator would be free to service the call from a user terminal. This time is then communicated back to the user terminal. The time when an operator terminal may be free to service a user terminal may be communicated to the user via an audio communication or may be provided by a text message if the mobile communications network provides a facility for data communications as is the case for the GSM network.

If a user wishes to accept a call back time then an acceptance signal is provided by the user, for example by touch-tone dialling or voice recognition processing, or for the case of a text message a data communication which is received via the PBX at the call control server. To this end, to communicate the call back time and receive an indication of acceptance, data channels 40 are provided. A further control channel 36 between the control server 22 and the PBX is provided in order to control the arrangement of calls between the PBX and the call control server.

Once the call control server 22 has received an acceptance of the call back time then the call from the user terminal concerned can be cleared pending call back at the pre-arranged time. Thus, the user is free to perform some other productive activity rather than waiting in the queue for the call to be serviced.

The call control server 22 may further provide a plurality of optional call back times to the user thereby providing the user with greater freedom to select a call back time, which is most appropriate. The call back time may be calculated in accordance with the mean time to service a call with the effect that the call back times make most efficient use of the available operator terminals within the service centre. Furthermore since calls to be serviced (the load) are made more predictable, a number of operators can be scheduled to optimise the service of calls at call back times.

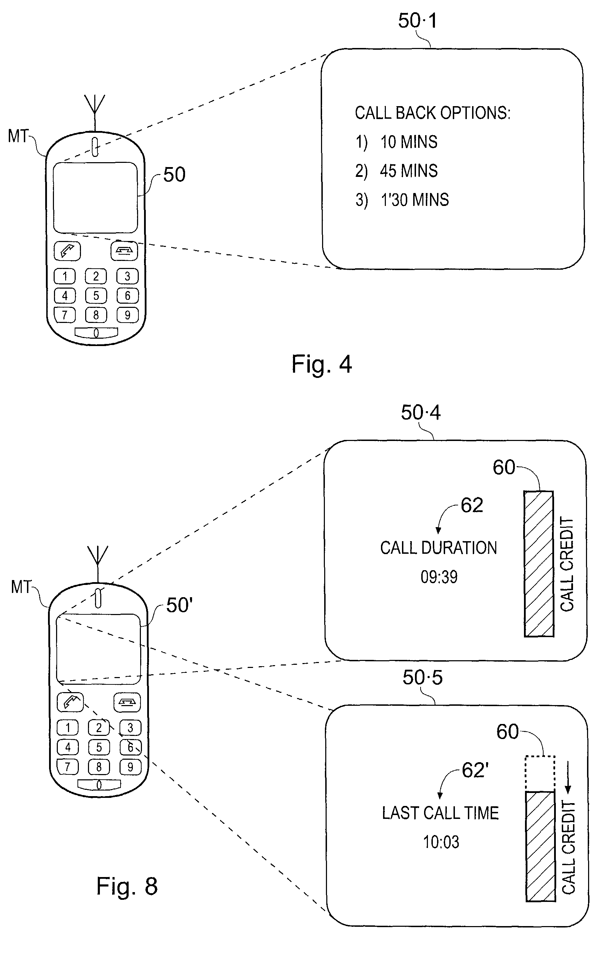

As illustrated in Figure 4 a mobile terminal MT is shown with a graphical display 50. The display 50 is shown in expanded form 50.1 to illustrate the call back time options communicated from the call control server 22 to the user terminal MT. Thus in accordance with this data communicated as text the user may respond giving an indication of one of the options "1", "2" or "3" which the user would prefer. Since the subscriber identity number or caller line identity number can be identified by the PBX, the call control service 22 can identify the calling user terminal in association with the selected call back time. To the end, in preferred embodiments the control server 22 includes a data store 38 for storing call back times which have been selected, in combination with the number of the mobile terminal which should be called at that time.

To arrange the call back, the call control server 22 may include a timer 42 for providing a real time reference to the call control server 22. The call control server compares the time provided by the timer 42 with the data stored in the data store 38 representing the call back time. When the call back time is equal to or passes that indicated by the timer 38, then the call control server 22 arranges for a call to be placed. The call control server 22 connects an operator terminal with the user terminal identified by the subscriber identity number or caller line identity number, which has also been stored in the data store 38. Alternatively, the call back time may be represented as a lapsed time (time from acceptance) as shown in Figure 4, the call control server timing the call back from the timer 42 with respect to the time from accepting the call.

One technique for identifying an operator terminal that can service a call back call to a user terminal is for the call control server 22 to monitor the current utilisation of the operator terminals. If an operator terminal is available then the call control server will arrange for the free operator terminal to be connected to the user terminal requiring call back. If however all operator terminals are occupied at the time that call back should occur, then the call control server reserves the next operator terminal to become free to be connected to the user terminal for call back. As such, an operator terminal does not have to be reserved for call back duty only, although call back may not occur exactly at the appointed call back time. Therefore the call control server 22 arranges particular call back times from the operator terminals which may be productively employed until one of them is selected around the call back time when one of the operator terminals becomes free.

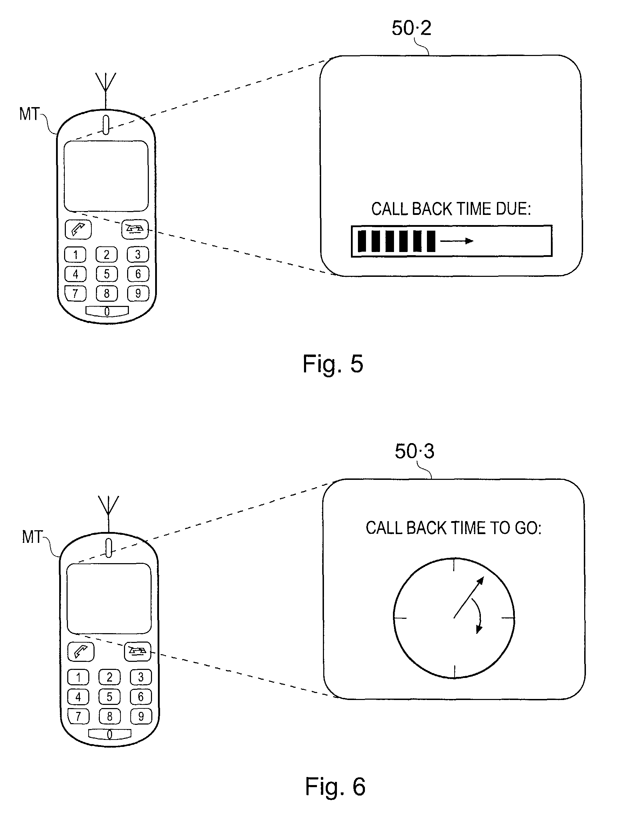

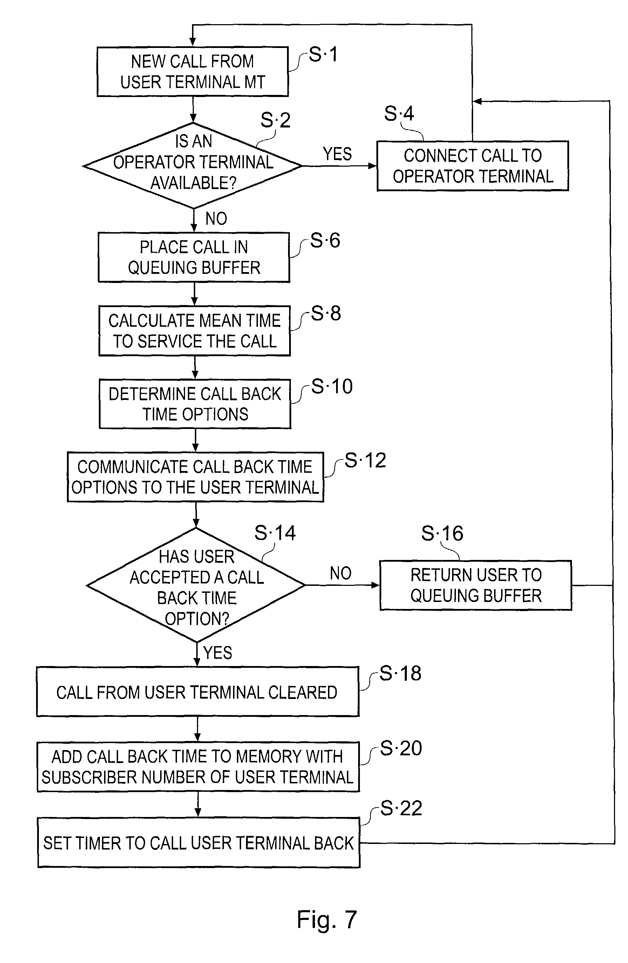

Further example techniques for providing a display of a selected call back time to the user are illustrated in Figures 6 and 7. So called smart 'phones such as for example the Orange SPV™ provide a facility for running applet programs which can deliver more user inter-active services. As such, for example, the applets can be used to both display call-back option times on a graphical user interface and provide the user with a facility for selecting one of the call-back times using the interface. Furthermore, the user can be provided with a graphical illustration of a time until call back time is due as illustrated in Figure 6 on an example graphical user display screen 50.2. A further illustration is provided in Figure 7, which shows a graphical display screen 50.3 providing a clock face of an amount of time to go before call back.

### Summary of Operation of Call Back

Figure 7 provides an example flow diagram summarising the operation of the call back control server in combination with the queuing buffer shown in Figure 3. The steps of the flow diagram shown in Figure 7 are summarised as follows:
S1: A new call is received by the PBX at the call control server via one of the service lines 20.2.
S2: The call control server determines whether an operator terminal is available.
S4: If an operator terminal is available, then the user terminal MT is connected to an operator terminal and processing proceeds to step S1.
S6: If an operator terminal is not available to service the call from the user terminal, then the call is placed in the queuing buffer 34.
S8: The call control server 22 then estimates a mean time to service the call from the state of the queuing buffer 34 and a mean service time of calls to the operator terminals.
S10: From the estimated time to service the call placed in the queuing buffer 34 the call control server 22 calculates a plurality of call back times.
S12: The call back time options are communicated to the user terminal as selectable options. The communication may be in the form of an audio communication, with a set of menu options selectable via a touch-tone or other audio or non-audio communication. Alternatively, the options may be communicated as a text message as illustrated in Figure 4. The communication may be effected via the separate communication channels 40 provided for this purpose between the call control server 22 and the PBX.
S14: The call control server then receives via the communications channels 40 an indication as to whether the user has accepted a call back time.
S16: If the user has not accepted a call back option then the call is returned to the queuing buffer pending servicing by an operator terminal.
S18: If the user terminal has accepted a call back time option then the user's call is cleared via the PBX through the separate channels 40 pending call back.
S20: The call back time selected by the user is then stored in the memory 38 with the subscriber identity number of the user terminal in order to set the call back option.
S22: The call control server periodically determines whether the time has reached the call back time. If the timer has reached a call back time, then the next operator to become free is reserved, and connected to the user terminal identified by the subscriber line identity number stored with the call back time in the data store 38. Processing then proceeds to step S1.

### Call Credit Indicator

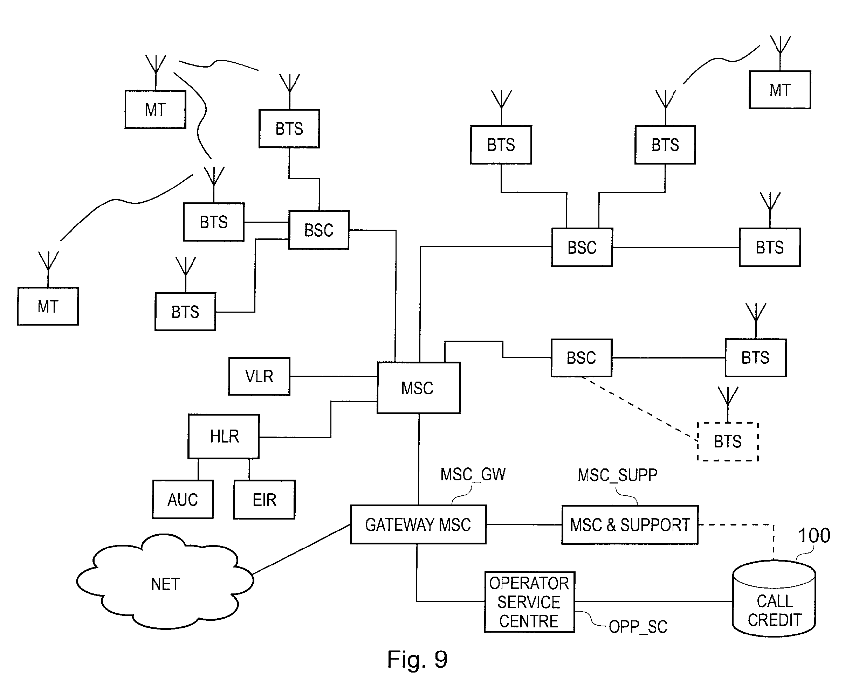

A further example technique for reducing a load on a call service centre, is illustrated in Figure 8. In Figure 8 a mobile terminal MT similar to the one shown in Figures 4, 5 and 6 is provided with a graphical representation of a remaining calling credit which is available to a user. As is known in the field of mobile telecommunications users generally may subscribe to either a monthly contract in accordance with predetermined tariffs or subscribe to a pre-purchase agreement in which a predetermined calling credit is purchased in advance. The calling credit is debited in accordance with calls made from the mobile terminal until the credit requires replenishing. Under the pre-purchase credit option a user cannot use a mobile terminal if there is insufficient credit available to make a call. Similarly, some monthly tariffs provide a predetermined calling credit, or a predetermined number of minutes for a particular calling tariff. After this number of minutes has been used, subsequent calls are charged, in addition to the monthly premium to the user. For this example, embodiments of the invention may provide a display, which indicates a number of minutes, which have been used for a particular tariff.

As illustrated in Figure 8, by an expanded graphic 50.4 appearing on the a graphical display 50' of the mobile terminal MT, a graphical representation of the calling credit in the form of a bar 60 is provided. Also displayed are messages to the user of the current duration of a call, which for the example shown in Figure 6 is "9 minutes and 39 seconds" on the first example display graphic 50.4.

For the example embodiment, the mobile terminal calculates a cost of the call from the duration of the call and the tariff for that call. In accordance with the cost of the call, the remaining calling credit is reduced and the bar 60 is reduced in size in accordance with the credit used. Therefore, as shown in the second representation of the graphic 50.5 appearing on the display of the mobile terminal, the bar 60 representing the credit has been reduced in accordance with the last call, which has now terminated. A message displayed on the display screen also states that the last call time was "10 minutes and 3 seconds". Accordingly, the user will know when and by how much the calling credit should be increased in order to make further calls. Alternatively, for monthly subscribing terminals, a number of minutes remaining, which may be included as part of the tariff may be displayed and correspondingly reduced in accordance with usage. By providing a representation of remaining credit as calling time or a monetary value, it will not be necessary for a user to call a call centre in order to ascertain remaining credit either via a text message or through a verbal confirmation from an operator.

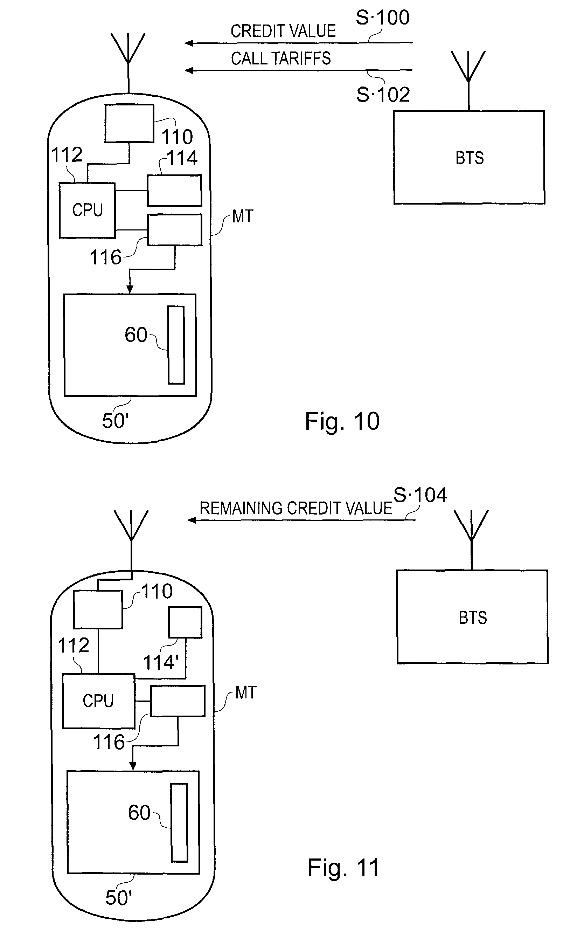

Figure 9 provides an illustration of an example arrangement through which calling credit is provided to the mobile terminal in order to display the calling credit to the user. Figure 9 illustrates the GSM network shown in Figure 1 but with a calling credit server 100 connected to the operator service centre OPP_SC. Optionally, the calling credit server 100 may form part of the mobile switching centre support unit MSC_SUPP or indeed may be located elsewhere in the network or attached to another network. The calling credit server 100 stores an available calling credit, which a user has previously pre-purchased or is provided as part of a monthly tariff. There are different implementations for providing the calling credit to the mobile terminal in accordance with embodiments of the present invention. Two examples are provided in Figures 10 and 11.

In Figure 10 a schematic representation of parts provided to implement the calling credit indicator embodying the present invention are shown within the mobile terminal MT. As shown in Figure 10 the mobile terminal MT includes a communications interface 110, a central processor unit 112 and an associated data store 114. Connected to the central processing unit 112 is a graphics display driver 116, which drives the graphical display 50'.

For one example embodiment, after a user has pre-purchased an amount of calling credit, this calling credit is stored within the calling credit server 100. As shown in Figure 10, as a schematic representation, the calling credit value is received from the network via the base station BTS using a first communication S100. A second communication S 102 provides calling tariffs associated with the calling credit. Both the credit value and the current calling tariffs are stored within the memory 114. Therefore, following a call made from the mobile terminal, the CPU 112 calculates the amount of calling credit which has been used in accordance with the duration of the call and the type of call being made. The calling tariffs may be determined in accordance with whether the call is a local call within the same area code or whether it is an international call. The calling tariffs may vary depending upon the operator, so that it will be appreciated that other calling tariffs are possible.

At the end of each call, the duration of the call is used with respect to the appropriate calling tariff to determine the amount of calling credit, which has been used. Correspondingly, the calling credit indicator 60 is adjusted in accordance with the calling credit used and data representing the remaining calling credit is stored in the memory 114. Contemporaneously with the calculation in the mobile terminal of the remaining calling credit, the calling credit server 100 uses information indicating the duration of the last call and the calling tariff to determine the remaining calling credit. Thus in operation warning messages may be communicated to a mobile terminal for the case where calling credit is running low or has expired. This may also be reflected by the calling credit indicator 60 shown in the display 50' of the mobile terminal MT.

An alternative arrangement embodying the present invention is shown in Figure 11. In Figure 11 the base station BTS communicates a remaining credit value S 104 at the end of a call. Therefore, as explained above the calling credit server 100 determines an amount of remaining credit from the duration of the call in combination with the calling tariff for that call. Therefore, for the example shown in Figure 11 no calculation of remaining value is made within the mobile terminal. However, the remaining calling credit is communicated to the mobile terminal as part of a signalling message communicated after the termination of a call. The CPU 112 stores data representing the remaining calling credit value received from the network, in a memory 114'. The CPU 112 and the graphics display driver 116 operate to represent the remaining calling credit on the bar 60 of the display 50'.

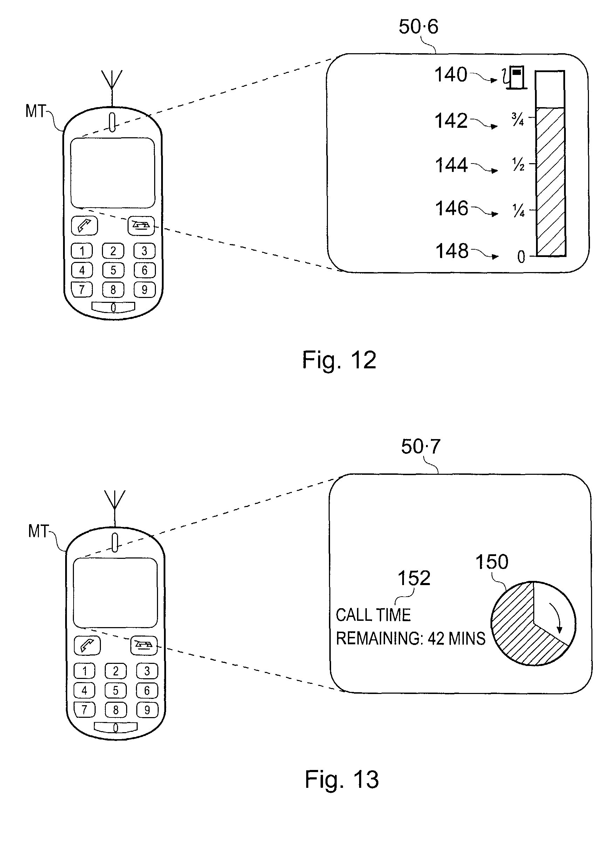

Further illustrations of techniques for displaying the amount of available calling credit to a user are provided in Figures 12 and 13. In Figure 12, an amount of available calling credit is provided in the form of a "fuel gauge" indicator in a graphical user display 50.6. Displaying an amount of calling credit as a fuel gauge showing "full tank" 140, "3/4 tank" 142, "1/2 tank" 144, "1/4 tank" 146 or "empty" 148 provides the user with a course indication of an available calling credit. As will be appreciated a "fuel gauge" is a representative example of generally displaying a course quantity, other examples being a battery level indicator. Providing a course indication of calling credit can be advantageous because an accuracy with which the amount of calling credit needs to be calculated can be substantially reduced. As such, for example, if the calling credit is calculated in the mobile terminal as for example illustrated in Figure 10, then the calling tariff information may only be updated periodically. As such an amount of calling credit available which has been calculated in the mobile terminal may be different to that which is actually available, as calculated in parallel in the network. Accordingly, by providing the user with a course indication of calling credit, the user is less likely to be disappointed if the calling credit actually available is less than that displayed as calculated by the mobile terminal.

An alternative technique for displaying calling credit is shown in Figure 13. In Figure 13 a graphical user display 50.7 is provided with a pie-chart indicator 150 showing a credit amount available. In addition, an actual amount of calling credit may be displayed as text 152.

### Outage Report from Network

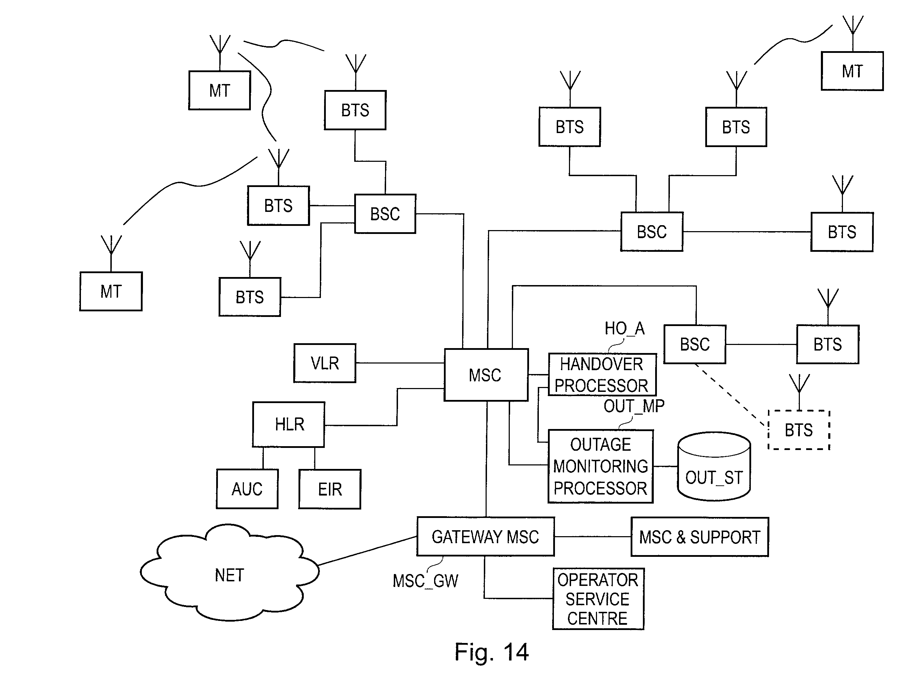

A further example embodiment, which provides a facility for reducing a load on a call centre or an operator centre, is illustrated in Figure 14. Figure 14 provides an illustrative diagram of the GSM network shown in Figure 1 but with an outage monitoring processor OUT_MP and an outage data store OUT_ST coupled to the mobile switching centre MSC in accordance with an embodiment of the invention. Also shown in Figure 14 is a hand-over processing apparatus HO_A, which may form part of the mobile switching centre MSC. The hand-over processing apparatus is responsible for controlling the affiliation of the mobile terminal with the base stations BTS of the mobile radio network as the mobile terminal moves throughout the network. The outage monitoring processor OUT_MP may also form part of the mobile switching centre or connected to the mobile switching centre MSC. Furthermore the outage monitoring processor OUT_MP is connected to the hand-over processing apparatus HO_A. The operation of the outage monitoring processor OUT_MP in combination with the outage data store and the hand-over processing apparatus will be explained in the following paragraphs.

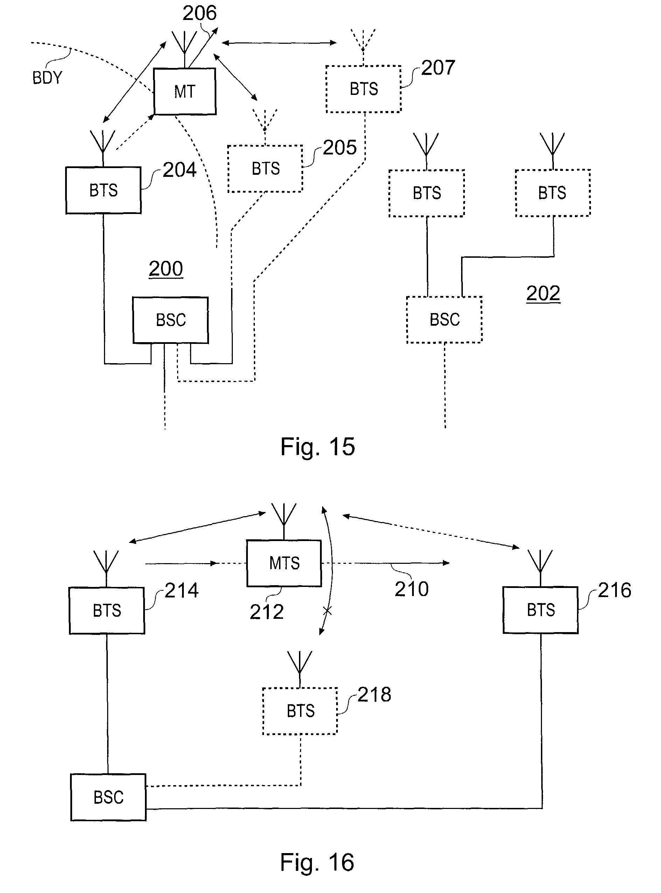

As all will be explained in the following paragraphs the outage monitoring processor OUT_MP is arranged to receive data indicating loss of services to mobile terminals in particular areas covered by the network. In response to the loss of service data the outage monitoring processor OUT_MP compares the area where the loss of service has occurred with outage information stored in the outage data store OUT_ST. The outage data store OUT_ST includes data indicating a reason for particular outage associated with the areas where outage is known. Therefore, in response to loss of service data the outage monitoring processor can generate a reporting message indicating the reason for a particular outage in a particular area. The reporting message may be communicated via the mobile radio network to the mobile terminal once communication with the mobile terminal is possible. The user is thereby automatically provided with a reason for the outage.
Example operations of the outage monitoring processor in accordance with embodiments of the present invention are illustrated in Figures 14, 15, 16 and 17. Figures 15 and 16 provide illustrative representations of how outage may be detected by a mobile terminal as a result of a loss of service.

Figure 15 provides an illustration of two base station sub-systems 200, 202. However the base station sub-system 202 has not yet been deployed and so is represented with a broken outline. The base station sub system 200 has been deployed. However two of the base stations 205, 207 are not yet in operation. Accordingly, a mobile terminal MT which is currently affiliated with a base station 204 is at a boundary BDY between an area where coverage is provided by the mobile radio network and an area where no coverage is provided. As illustrated by an arrow 206 the mobile terminal MT is currently moving away from the base station 204 with which it is currently affiliated. Therefore, in accordance with a conventional operation of the GSM system, the network would arrange for the mobile terminal MT to hand-over to another base station when predetermined conditions have been satisfied. The hand-over is controlled by the hand-over processing apparatus forming part of the mobile switching centre MSC. Typically, this involves measuring the received signal strength of a pilot channel or a broadcast signal, which for the example of the GSM standard is the BCCH channel. The BCCH channel is transmitted by each base station in the network. The BCCH includes a synchronisation burst having a Base Station Identity Code (BSIC). This code is used by the mobile terminal MT to identify the most appropriate base station with which to be affiliated. Accordingly, where, for example, the level of the down-link received signal strength or the bit error rate are below predetermined values, the mobile terminal should hand-over to another base station. However where there are no such base stations available then a call may be lost or at least a loss of service may occur. In response to a call being lost or where the pre-determined conditions have been reached but no hand-over is possible, loss of service data is generated within the network.

In one embodiment the loss of service data may be generated by the hand-over processing apparatus HO_A, or at least initiated by the hand-over processing apparatus. The loss of service data is communicated to the outage monitoring processor OUT_MP.

The loss of service data indicates that a loss of service to a mobile terminal has occurred and includes an identification of the base station with which the mobile terminal was affiliated when loss of service occurred. Thus, the loss of service provides a geographical indication of the area where service has been lost, from the identity of the base station.

Figure 16 provides a further example illustration of where loss of service may occur. An arrow 210 indicates a direction of motion of a mobile terminal 212. The mobile terminal 212 is travelling between cells serviced by base stations 214 and 216. The mobile terminal is affiliated with the first base station 214 and so communicates through this base station 214. As the mobile terminal MT moves towards the second base station 216 the signal with the first base station 214 becomes weaker and correspondingly the received signal strength becomes lower and/or the down-link bit error rate increases. A third base station 218 is positioned to service the mobile terminal as the mobile terminal moves away from the first base station 214. However, the third base station 218 is currently not available as a result of, for example a fault or a temporary outage due to servicing of that base station 218. Therefore, although the mobile terminal 212 would change affiliation by handing over to the third base station 218 this is not possible. As such, the mobile terminal must wait until the received signal strength of the BCCH broadcast by the second base station 216 reaches a level which can support communications via that base station 216. Therefore, as illustrated in Figure 12 although the mobile terminals should hand-over to the third base station 218 it cannot do so as a result of a temporary outage. Therefore, the mobile terminal remains affiliated to the first base station 214 even though the received signal strength and/or the down-link bit error rate for the BCCH for the first base station 214 has reduced to below a level which would otherwise cause a hand-over. Therefore, a call may be lost from this mobile terminal 212 as a result of the movement of the mobile terminal from the first to the second base stations 214, 216. As a result, loss of service data may be generated by the hand-over processing apparatus HO_A, because the hand-over conditions have been exceeded but no hand-over is possible.

Figure 16 provides an example where a call is lost or at least the quality of service is reduced as a result of a lack of availability of the third base station (outage) which would otherwise be available to serve the mobile terminal 212. The lack of availability of the third base station 218 causes the received signal strength of the BCCH of both the first and second base stations 214, 216 to be below a threshold which would otherwise trigger a hand-over. Again the area indicated by the BCCH to the mobile terminal provides geographical location of the loss of service.

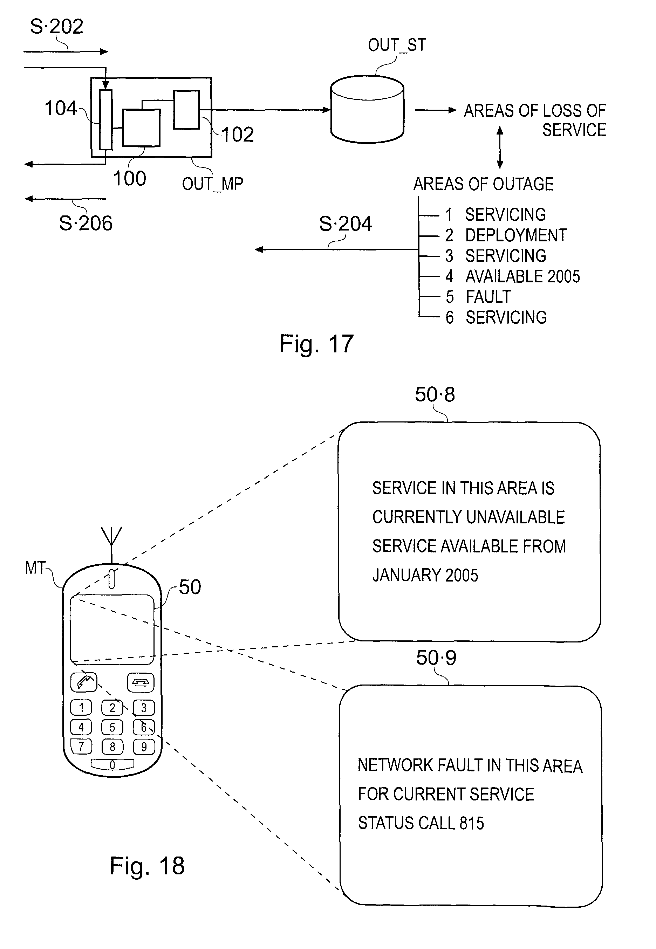

The operation of the outage monitoring processor OUT_MP is illustrated in Figure 17. Outage data representing known areas where mobile terminal users will experience temporary or persistent outage are stored within the outage store OUT_ST. The outage data provides an indication of the geographical location and the reason for the outage.

As shown in Figure 17, the outage monitoring processor comprises a data processing device 100 which is coupled to an interface 102 for sending and retrieving information to and from the outage data store OUT_ST. The outage monitoring processor also includes a communications interface 104 for receiving and sending data to the mobile switching centre MSC.

In Figure 17 a loss of service message S202 is received by the outage monitoring processor OUT_MP from the network. In response to a loss of service message, which includes an indication of the geographical location of the loss of service, the outage monitoring processor OUT_MP interrogates the outage store OUT_ST. The outage monitoring processor OUT_MP compares the area indicated within the loss of service data with a list of areas where outage is known. As illustrated in Figure 17 for example, the outage areas are numbered "1" through "6" although it will be appreciated that other codes or indications may be used to identify particular geographical areas. The outage data stored in the data store OUT_ST includes the areas of the outage and a corresponding reason for the outage. For example, the outage for area 1 is due to servicing, whereas the outage for area 2 is due to pending deployment of base stations to increase the radio coverage area. Indeed for area 4 a predicated availability for a service is given as "the year 2005". For area 5 a fault has been reported which has caused an outage.

The outage monitoring processor compares data representing the geographical area associated with the loss of service received via communicated message 202, with data representing known areas of outage stored in data store OUT_ST. As a result of the comparison the outage monitoring processor OUT_MP identifies the reason for outage, which has been pre-stored in the outage data store OUT_ST. Data representing the reason for the outage is thereby recovered from the store OUT_ST by the monitoring processor OUT_MP. The data indicating the reason for outage is formed into a message S204 by the outage monitoring processor OUT_MP and communicated back to the mobile terminal as a message 206.

Figure 18 provides an illustration of possible outage messages received from the network as a result of triggering a loss of service message. As shown in display graphic 50.8 the reason for an outage in one area is a current unavailability of the service. In addition, an indication that the service will be available from the year "2005" is provided to the user. A further example is given as a further illustration of an example text message displayed on the display screen 50.9. For this example, a network fault has occurred. Therefore in addition to the message indicating the reason for the outage, users are provided with a number to call (815) in order to ascertain information showing the current status of the investigation and remedial work to correct the fault. The status information may be provided as a text message or an audio communication, thereby obviating a requirement to call a call centre to ascertain this information.

According to the example embodiments of the invention users are provided automatically with a reason and associated information when a loss of service is experienced. As a result, there is no reason for users to call a call centre or operation service centre in order to enquire as to the reason for the loss of service. Furthermore, providing automatically a reason for a loss of service improves user satisfaction with the operator of a network. In some example embodiments an apology may be provided with the associated loss of service response message further improving customer relations.

Various further aspects and features of the present invention may be defined in the appended claims. Modifications may be made to the embodiments described without departing from the scope of the present invention. In particular, it will be appreciated that embodiments of the present invention find applications with any telecommunications network or indeed application generally to improving services provided from call centres or operator centres. It will be appreciated that the GSM network has been provided as an illustrative example only and that different communications network and standards may be used, such as 3G, CDMAone and CDMA2000 amongst others.

## Claims

1. A telecommunications apparatus operable to provide information to mobile terminals for determining calling credit information for accessing a mobile radio telecommunications network, the telecommunications apparatus including
a credit server for storing an amount of available calling credit, the credit server being operable to determine the duration of a call made by a user from a mobile terminal, wherein the credit server is operable upon termination of a call to communicate data to the mobile terminal, the data providing information to the mobile terminal from which an amount of available calling credit is displayable to the user.

2. A telecommunications apparatus as claimed in Claim 1, wherein the data provided by the credit server to the mobile terminal includes an amount of calling credit remaining to the user after the termination of the call, the credit server being operable
to determine the duration of the call,
to calculate the amount of calling credit used from the duration of the call,
to determine the amount of calling credit remaining from the available calling credit and the used calling credit and
to store the remaining calling credit as the available calling credit.

3. A telecommunications apparatus as claimed in Claim 2, wherein the credit server is operable to determine the amount of calling credit used by determining a calling tariff for the call and calculating the amount of calling credit used from the duration of the call multiplied by the tariff for the call.

4. A mobile terminal for communicating via a mobile radio telecommunications network, the mobile radio network including a telecommunications apparatus as claimed in Claim 1, 2 or 3, the mobile terminal comprising
a radio communications interface operable to send and receive data via a radio access interface to and from the mobile radio telecommunications network,
a graphical display driver for displaying information on a graphical display device, and
a processor unit operable to receive a signalling message from the telecommunications apparatus which is communicated after termination of a call, the signalling message indicating an amount of calling credit remaining to a user of the mobile terminal, wherein the processor unit is operable in combination with the graphics display driver to represent the remaining calling credit graphically on the graphical display device.

5. A mobile terminal as claimed in Claim 4, wherein the remaining calling credit is displayed as a bar graph, the graph representing calling credit as one of a monetary credit value or a remaining calling time as a relative height of the bar.

6. A mobile terminal as claimed in Claim 4, wherein the calling credit is displayed as a course indication of available calling credit.

7. A mobile terminal as claimed in Claim 6, wherein the calling credit is displayed as a fuel gauge indication.

8. A telecommunications apparatus operable to provide information to mobile terminals for determining calling credit information for accessing a mobile radio telecommunications network, the telecommunications apparatus comprising
a credit server for storing an amount of available calling credit, and at least one calling tariff for making calls, the credit server being operable to communicate data representing the available calling credit to the mobile terminal and the calling tariff, to determine the duration of a call made by a user from a mobile terminal, and upon termination of the call to communicate data providing the duration of the call to the mobile terminal, the mobile terminal being provided with data from which an amount of available calling credit is displayable to the user.

9. A telecommunications apparatus as claimed in Claim 8, wherein the credit server is operable to determine an amount of remaining calling credit by
calculating the amount of calling credit used from the duration of the call, in combination with the calling tariff used for the call,
calculating the remaining calling credit by subtracting the calling credit used during the call from the available calling credit, and
storing the remaining calling credit as an amount of calling credit available to the user.

10. A mobile terminal for communicating via a mobile radio telecommunications network, the mobile radio network including a telecommunications apparatus as claimed in Claim 8 or 9, the mobile terminal comprising
a radio communications interface operable to send and receive data via a radio access interface to and from the mobile radio telecommunications network,
a graphical display driver for displaying information on a graphical display device, and
a processor unit operable to receive first signalling data from the telecommunications apparatus providing an amount of calling credit available to a user of the mobile terminal and at least one calling tariff, wherein second signalling data is communicated after termination of a call, the second signalling data indicating the duration of a call, wherein the processor is operable to determine an amount of calling credit remaining to a user of the mobile terminal from the duration of the call provided by the second signalling data in combination with the calling tariff for the call and the remaining calling credit provided by the first signalling data, and in combination with the graphics display driver to represent the remaining calling credit graphically on the graphical display device.

11. A mobile terminal as claimed in Claim 10, wherein the remaining calling credit is displayed as a bar graph, the graph representing calling credit as one of a monetary credit value or a remaining calling time as a relative height of the bar.

12. A mobile terminal as claimed in Claim 10, wherein the calling credit is displayed as a course indication of available calling credit.

13. A mobile terminal as claimed in Claim 12, wherein the calling credit is displayed as a fuel gauge indication.

14. A method of providing information to mobile terminals for determining calling credit information for accessing a mobile radio telecommunications network, the method comprising
storing an amount of available calling credit in a credit server forming part of the mobile radio telecommunications network,
determining the duration of a call made by a user from a mobile terminal,
upon termination of a call, communicating data to the mobile terminal, the data providing information to the mobile terminal from which an amount of available calling credit is displayable to the user.

15. A method as claimed in Claim 14, wherein the data provided by the credit server to the mobile terminal includes an amount of calling credit remaining to the user after the termination of the call, the method comprising
determining the duration of the call,
calculating the amount of calling credit used from the duration of the call,
determining the amount of calling credit remaining from the available calling credit and the used calling credit, and
storing the remaining calling credit in the credit server as the available calling credit.

16. A method as claimed in Claim 15, wherein the determining the amount of calling credit, comprises
determining a calling tariff for the call, and
calculating the amount of calling credit used from the duration of the call multiplied by the tariff for the call.

17. A method as claimed in Claim 14, comprising
storing at least one calling tariff for making calls in the credit server,
communicating data representing the available calling credit and the calling tariff to the mobile terminal, wherein the data provided by the credit server to the mobile terminal upon termination of a call includes the duration of a call, the method comprising
determining in the mobile terminal an amount of calling credit remaining to the user from the duration of the call, the calling tariff and the available calling credit, the mobile terminal being thereby provided with data from which an amount of available calling credit is displayable to the user.

18. A method as claimed in Claim 17, wherein the credit server is operable to determine an amount of remaining calling credit by
calculating the amount of calling credit used from the duration of the call, in combination with the calling tariff used for the call,
calculating the remaining calling credit by subtracting the calling credit used during the call from the available calling credit, and
storing the remaining calling credit as an amount of calling credit available to the user.

19. A method as claimed in any of Claims 14 to 18, comprising
displaying using a graphics display driver to represent the remaining calling credit graphically on a graphical display device of the mobile terminal.

20. A method as claimed in Claim 19, wherein the remaining calling credit is displayed as a bar graph, the graph representing calling credit as one of a monetary credit value or a remaining calling time as a relative height of the bar.

21. A mobile terminal as claimed in Claim 19, wherein the calling credit is displayed as a course indication of available calling credit.

22. A mobile terminal as claimed in Claim 21, wherein the calling credit is displayed as a fuel gauge indication.

23. Computer software having program code for carrying out a method according to any of Claims 14 to 20.

24. Computer software having program code, which when loaded onto a data processor causes the data processor to operate as the telecommunications apparatus according to any of Claims 1 to 3 and Claim 8 or 9, or a mobile terminal as claimed in any of Claims 4 to 7, or Claims 10 to 13.

25. A medium for providing program code according to claim 23 or 24.
